Europäisches Patentamt

European Patent Office

Office européen des brevets

(11) Publication number: **0 181 880**
**B1**

# EUROPEAN PATENT SPECIFICATION

(45) Date of publication of patent specification: 23.08.89

(51) Int. Cl.⁴: **H 04 L 11/00, H 04 L 11/12**

(21) Application number: 85902095.0

(22) Date of filing: 14.05.85

(86) International application number:
PCT/GB85/00203

(87) International publication number:
WO 85/05519 05.12.85 Gazette 85/26

(54) **APPARATUS FOR INTERFACING WITH X21 EQUIPMENT.**

(30) Priority: 15.05.84 GB 8412355
04.04.85 GB 8508807

(43) Date of publication of application:
28.05.86 Bulletin 86/22

(45) Publication of the grant of the patent:
23.08.89 Bulletin 89/34

(84) Designated Contracting States:
AT BE CH DE FR GB IT LI LU NL SE

(56) References cited:
GB-A-2 054 171

Wescon Technical Paper, volume 26,
September 1982, (North Hollywood, US). C.
Yager: "High Integration LSI for low cost
asynchronous communications"

Data Communications, volume 10, nr. 4, April
1981, (New York, US). D. T. Winston: "Fitting
DTEs to an X.21 network link", pages 135-141

Electronic Design, volume 31, nr. 13, June
1983, (Waseca, MN, Denville, NJ, US). D.K.
Wilkin: "Protocol analyzer speeds comm
network maintenance", pages 123-128

(73) Proprietor: BRITISH TELECOMMUNICATIONS
plc
British Telecom Centre 81 Newgate Street
London EC1A 7AJ (GB)

(72) Inventor: GLEEN, Keith, Ernest
1 Avocet Lane Martlesham Heath
Ipswich Suffolk IP5 7SF (GB)

(74) Representative: Semos, Robert Ernest Vickers
et al
BRITISH TELECOM Intellectual Property Unit
13th Floor 151 Gower Street
London WC1E 6BA (GB)

(56) References cited:
Tekscope, volume 12, nr. 4, December 1980
(Beaverton, Oregon, US). P. Janowitz et al.: "A
programmable data communications tester for
first-line technicians"

IBM Technical Disclosure Bulletin, volume 26,
nr. 7A, December 1983, (New York, US). R.A.
Pascoe: "Interconnecting devices of different
communication protocols", pages 3483-3484

Courier Press, Leamington Spa, England.

**Description**

Background of the Invention
Field of the Invention

This invention relates to apparatus for interfacing with equipment which is designed for signal transmission over public data networks between Data Terminal Equipment (DTE) and Data Control Equipment (DCE).

Description of the Prior Art

The interface involves four basic phases of operation: idle, call establishment, data transmission and disconnection, and has the property that information is conveyed by a Transmit (T) and a Receive (R) line in both a steady state form and a bit/byte synchronous serial form. Apparatus for interfacing with such equipment is required to produce and monitor steady state conditions on these lines at various states of a call. The majority of prior art apparatus is expensive, complex and not capable of operating up to and above 64 kbits/sec.

In the field of asynchronous data communications between for example a small business computer and a modem, it is known from Wescon Technical Paper, Vol. 26, September 1982, (North Hollywood, US), C. Yager: "High Integration LSI for low cost asynchronous communications" to use an LSI device called a Multifunction Universal Asynchronous Receiver Transmitter (MUART) to implement certain lines of the interface with the MUART's parallel input/output.

Summary of the present invention

According to the present invention there is provided apparatus for providing an interface to equipment adapted to convey information over a data transmission link having Transmit (T) and Receive (R) lines on which in accordance with an interface protocol data is sometimes presented in bit serial form and sometimes presented in steady state form in conjunction with additional Indication (I), Control (C) and Signal Element Timing (S) lines, which apparatus is characterised by processing means (10, 11, 12) adapted for processing signals for transmission to or reception from such a link, and means for coupling the processing means to said link, the coupling means including a serial input/output device (15) and a parallel input/output device (16) and associated drivers (24, 25) and receivers (20, 21, 22), and logic means (30) for selectively connecting under the control of the processing means (10, 11, 12) a driver (24) to the serial input/output device (15) for the bit/byte synchronous portions of the interface protocol, or to the parallel input/output device (16) for the steady state portions of the interface protocol.

An output from the parallel device can be fed to the logic means to control switching between steady state and bit/byte synchronous operation.

Preferably the output comprises a port of the parallel input/output device which port is part of the same multibit parallel output port as the Transmit steady state output port.

Apparatus of this form can be constructed in a relatively simple way and can operate at speeds substantially higher than those of prior art devices.

The processing means may comprise a microprocessor with associated memory.

The apparatus can take the form of an adaptor including a second serial input/output device by means of which equipment which communicates via a serial data link can be coupled to said processing means, and wherein said processing means is arranged to adapt signals emanating from one source so that they are suitable for reception by the other. The apparatus may include an additional port controllable by said parallel input/output device for connection to other terminal equipment.

The apparatus may take the form of a tester for data transmission equipment, in which the processing means is arranged to generate test sequence signals for application to equipment to be tested over the data transmission link.

Brief Description of the Drawings

The invention will now be described, by way of example, with particular reference to the accompanying drawings. In the drawings:—

Figure 1 is a block schematic diagram of an embodiment of apparatus in accordance with the present invention;

Figure 1A is a block schematic diagram similar to Figure 1 showing part of the apparatus in more detail;

Figure 2 is a block schematic diagram showing use of the apparatus of Figures 1 and 1A as a tester;

Figure 3 shows the sequence of events for the apparatus of Figures 1 and 1A during an incoming call to a DTE;

Figure 3A shows the sequence of events for the apparatus of figures 1 and 1A during an outgoing call from a DTE;

Figure 4 is a diagram showing software structure for the tester of Figure 2;

Figure 5 is a block diagram showing one example of a program module for a tester as shown in Figure 2 acting as a DCE;

Figure 6 illustrates use of the apparatus of Figure 1 as an adaptor;

Figure 7 is a block schematic diagram illustrating the software structure for the adaptor of Figure 6, and

Figure 8 is a block diagram showing one example of the operation of a program module when an adaptor as shown in Figure 6 handles an outgoing call.

Description of the Preferred Embodiments

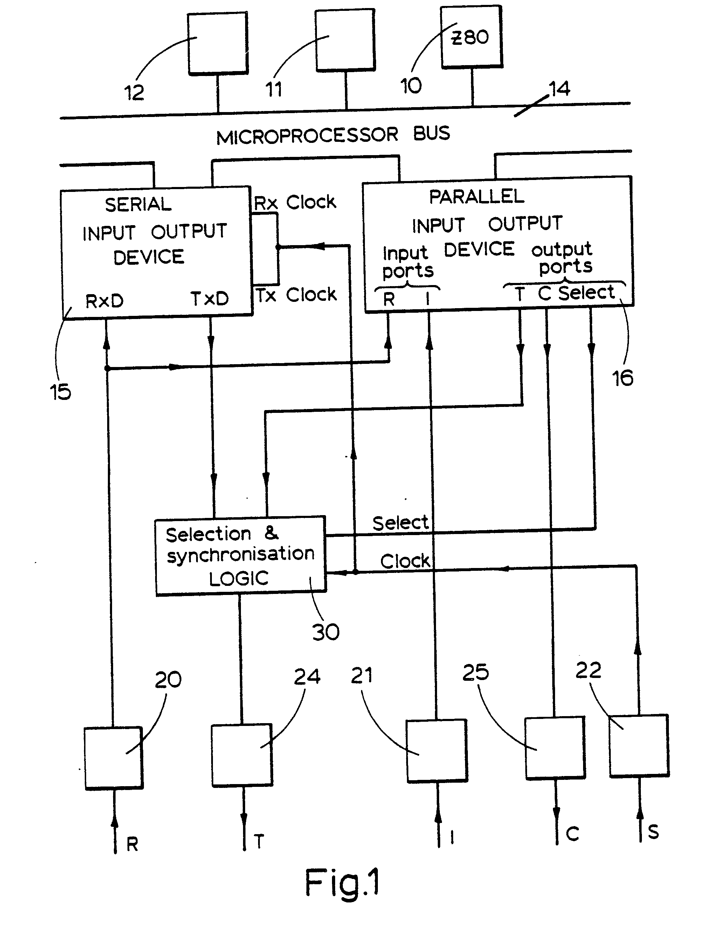

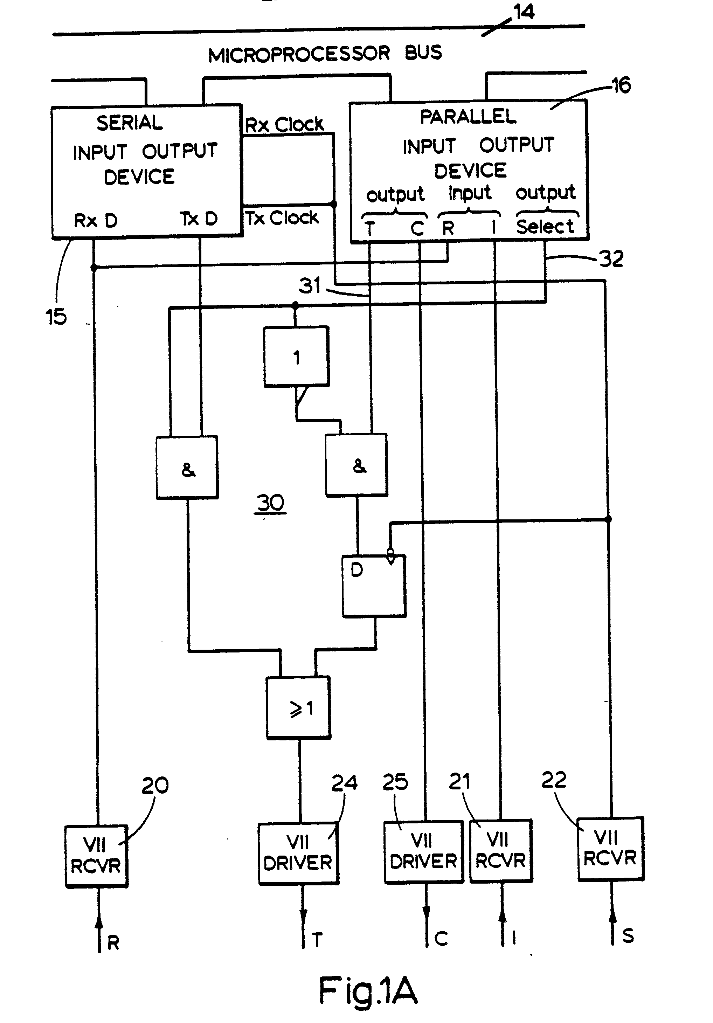

Referring to Figure 1 an embodiment of apparatus according to this invention is a microprocessor based device. The apparatus includes a processor 10 which is a Z80 device having associated ROM 11 and RAM 12 which can communicate via a microprocessor bus 14. Software is stored in the memory and can be run by the processor in a manner which will be described later.

The apparatus has a serial input/output device 15 and a parallel input/output device 16 by means of which it can interface with an X21 link. X21 is a circuit-switched network access standard which is a CCITT Recommendation, and currently known in the art, accordingly, no details of the interface standard are given herein. The input/output devices are connected to the RTICS lines of the X21 link by way of receivers 20, 21, 22 and drivers 24, 25 and selection and synchronisation logic 30. The connections of these devices are as shown in the Figure. In operation of the apparatus the serial input/output device 15 is arranged to operate the bit/byte synchronous portions of the X21 protocol whilst the parallel input/output device carries out the steady state functions. The parallel device also controls the selection and synchronisation logic 30 so that the apparatus switches correctly between steady state and bit/byte synchronous working. Details of one example of the logic 30 is shown in Figure 1A.

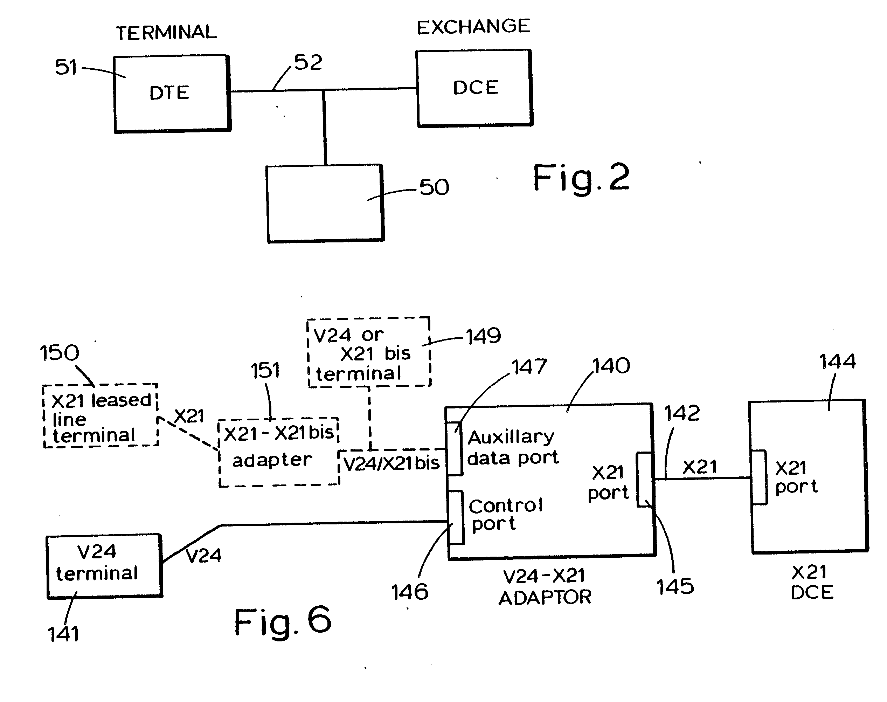

The apparatus shown in Figures 1 and 1A may be arranged for testing X21 based equipment. On an X21 link, one end is usually a data terminal equipment (DTE) and the other is data control equipment (DCE). The apparatus may be connected to the link for testing purposes either as a DTE or as a DCE and may operate either as a calling or as a called module. One example is shown in Figure 2 where the testing apparatus shown generally at 50 is connected at the exchange end as a DCE and operates in place of the DCE so that it can be used to test the DTE 51 connected at the other end of the link 52. A second mode of operation of the tester is as a two port exchange simulator where the testing apparatus is connected between two DTEs.

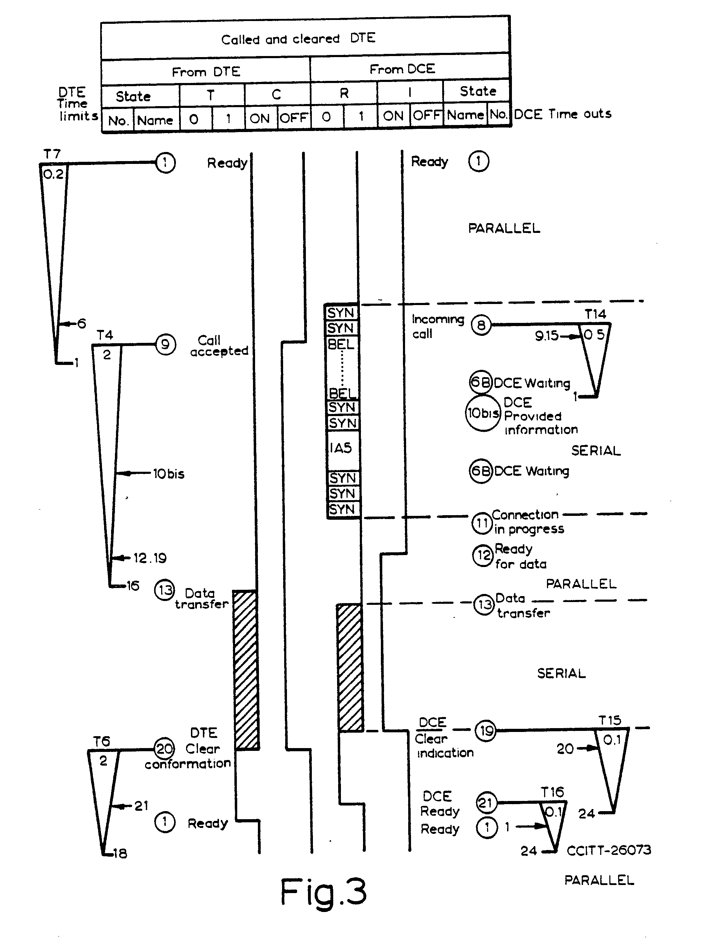

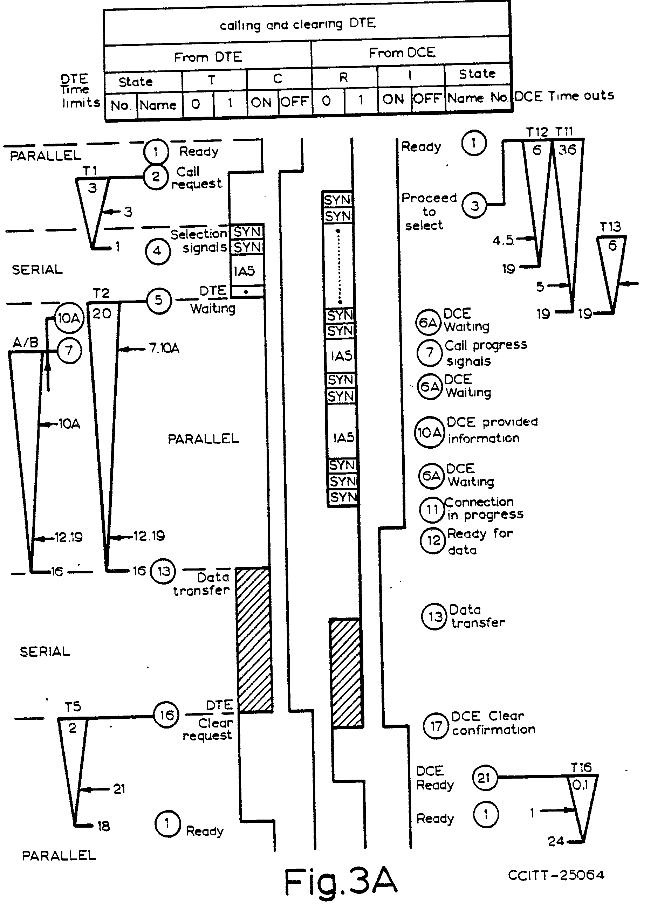

When the apparatus is connected to a link as shown for example in Figure 2 for a testing operation signals received on the R-line are handled by feeding the R-line to both the serial input/output device RxD line and an input port of the parallel input/output device (Figure 1). The microprocessor software reads the appropriate input depending upon the state of the protocol. In the case of transmission of signals on the T-line the signal transmitted is selected from one of the two sources, the selection depending upon the state of the protocol. One source is the TxD output of the serial input/output device 15 and the other source is an output 31 of the parallel input/output device 16. The selection logic 30 is controlled from a further output 32 of the parallel device. Suitable circuitry is included in the selection logic to ensure that state changes on the T-line occur at the correct times. During the steady state portions of the protocol the T-line is sourced from the parallel input/output device while during bit/byte synchronous portions of the protocol transmission is from the serial input/output device. This is illustrated in Figure 3 of the drawings which shows the state on the T, C, R and I lines at various stages in a sequence of events for a called DTE and also indicates which of the input/output devices is operating at any particular time during the sequence. Figure 3A shows the status of the T, C, R & I lines for a calling DTE.

The apparatus also includes a VT100 terminal (not shown) which is linked to the processor in a conventional way and enables the user to select the type of test to be carried out. When the apparatus is powered up the user is presented with a menu on the terminal and the particular test can be selected using the terminal keyboard.

When used in a terminal mode the user can select either the DCE or DTE function. In either function the tester is a single port X21 device. In the DCE function called terminal mode the user can select a transmission speed which can be 1200, 2400, 4800, 8000, 9600, 32000, 48000 or 64000 bits per second. The user can enter any ASCII sequence of up to 40 characters in length to generate a call progress signal. The tester does not check this string and allows correct or incorrect signals to be generated as required by the user. The user may enter any combination of up to 40 ASCII characters for transmission to the called DTE during the incoming call sequence. The user is asked to define steady state initial conditions for the R and I lines. In this way the user can set up any steady state conditions towards the DTE. This state is maintained until the standard called DCE simulation is initiated by the user.

During the data transfer state the tester monitors the data lines and correctly displays data transferred in any one of three formats. These are HDLC, Bisync and Monosync. If the answer to the following question, on data source, is internal then data entered at the monitor key board will be transmitted in the chosen protocol format. When the tester reaches the data transfer state, the tester may either become a source of data via the monitors key board or may switch the X21 line through to an auxiliary X21 port. This feature allows other test equipment to be used during the data transfer stage.

In the case of the tester operating in the DCE function as a calling terminal the menu choices are similar to that just described for the called terminal mode except that no call progress signal input is requested and the standard set up procedure is for an X21 calling terminal.

In the case of testing the DTE function there are again two modes namely, the called terminal and calling terminal. In both cases no speed parameter is required since a DTE requires all timing information from the DCE. In the case of the called terminal mode the user is asked to define steady state initial conditions for the T and C lines. In this way the user may set up any steady state conditions towards the DCE. This state is maintained until the standard called DTE simulation is initiated by the user. The monitoring of data transfer is similar to that described above for the DCE.

In the case of the DTE as a calling terminal the menu choices are similar to the called terminal state with the addition of a select signal which allows the user to enter any combination of up to 40 ASCII characters to represent the select signal.

When the tester operates in the exchange simulator mode the user can select from the speeds referred to above for the DCE function. The user may enter any ASCII sequence of up to 40 characters in length and the tester does not check this string thus allowing correct or incorrect signals to be generated as required by the user. For called DCE provided information, the user may enter any combination of up to 40 ASCII characters that are transmitted to the called DTE during the incoming call sequence. For calling DCE provided information the situation is similar to that described but it is transmitted to the calling DTE during the DCE waiting sequence of the call set up. During data transfer the tester is logically transparent. It does however monitor the transmit and receive data lines as well as the control and indication lines. The user is therefore given the option to select one of the three formats referred to above to enable display of terminal data during this phase.

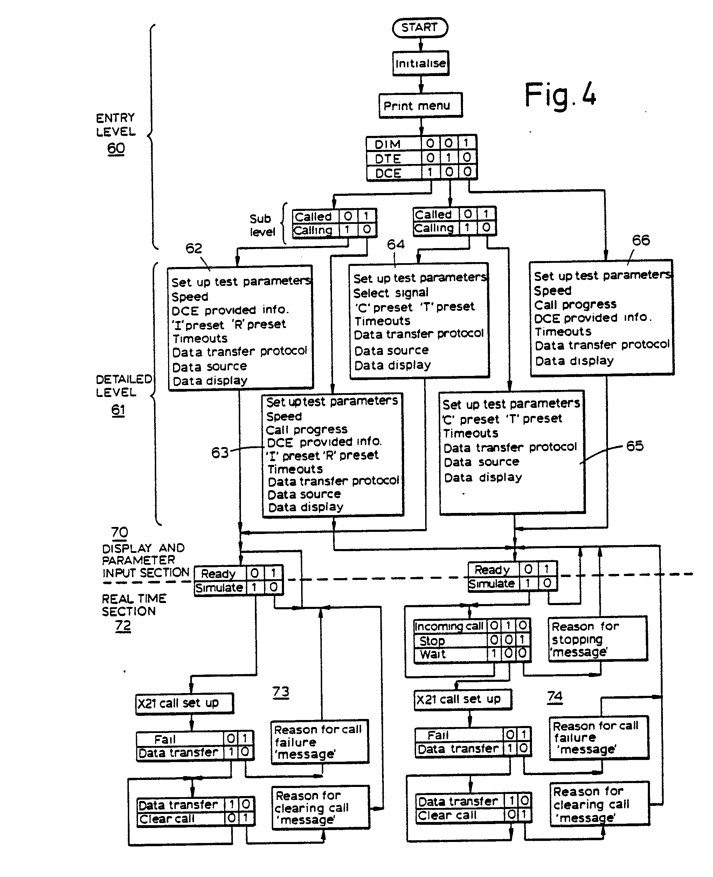

A general description will now be given of the software employed by the X21 tester described above with reference to Figure 4 of the drawings. This can be considered as comprising two main sections as follows:

1. A non-real time section which is used to display menu options and accept tester parameters input from the control terminal via a V24 port. This section also contains the main static state of the tester.

2. A real time section which provides the X21 simulation and test facilities on the X21 ports.

Dealing with the first section the tester software enters this section via an initialisation module on power up. The initialisation module sets some tester parameters to default values and initialises the hardware including the V24 port used for control of the tester. This section of the program essentially has three levels which can be seen in Figure 4 of the drawings. These are:

(a) an entry level in which the user is requested to choose one of the five modes of operation of which the tester is capable and which have been referred to above.

(b) a detailed level in which the user is requested for input parameters regarding the detailed test for the particular mode chosen at the entry level.

(c) a ready state level to which the tester returns at the completion of a test/simulation sequence.

For the first two levels the user is presented with a menu of options which the user may select by moving the cursor on a screen to the appropriate choice and then pressing an enter or carriage return key.

The entry level module 60 displays an initial menu on the control console. The user is requested to enter which configuration is required of the tester. This is achieved by presenting the user with a list of three possible options (DCE, DTE and X-SIMULATOR) and the user is invited to make his selection.

Depending upon the option chosen the program may either go direct to the second detailed level modules or via one of two sub-level modules. If either DCE or DTE modes are selected a sub-level menu is displayed to request input on whether the tester is to be a Calling or a Called device. The users entry at this level ensures that the program will go the correct module at the detailed level. If the exchange simulator mode is chosen then the sub-level menu is not required and the program goes immediately to the detailed level module appropriate to that mode.

At the detailed level 61 there are five program modules, one for each of the tester modes of operation:

Called DCE 62
Calling DCE 63
Called DTE 64
Calling DTE 65 and
Exchange Simulator 66.

Each module presents a menu of options to the user requesting input parameters appropriate to that mode of operation. These parameters include speed, data display (Hex or ASCII), data source in the data transfer state (Internal or External), Selection Signals etc.

When the user has input some or all the desired parameters the tester can be made to enter a Ready state in which the tester is configured according to the parameters input.

At the Ready state level 70 the user is presented with a new display appropriate to the real-time mode selected. Upon further command from the user the tester will then enter the simulation and testing mode modules of the Real Time section of the program. If the user requires to return to the initial menu from this level, a command may be entered at the keyboard.

In the Real Time Section 72 there are two main modules of software:

— a calling module 73
— a called module 74

In both modules the software is required to meet the real time specifications of the X21 interface(s) and the user display and keyboard is allocated a low priority. The basic structure of each module is similar in that the X21 interface is operated according to the parameters input above. If the unit under test meets those parameters the tester will continue the protocol successfully. If, however, the tester encounters a failure it will record the event and leave the real time section of the program to return to the Ready state of the Display section. This transition to the Ready state will also occur if a Call Clear state is detected on the X21 port(s).

On entry to the called module 74 the program enters a waiting state for an incoming (to the tester) call on the X21 port(s). If any other condition is detected the program will record the condition and issue an update to the user display console. It will then return to the Ready state.

An incoming call causes the program to obey the X21 protocol according to the pre-defined parameters entered during the non-real time section. Any deviation by the unit under test from these parameters will cause the program to advise the user via the display and for the program to return to the Ready state.

A successful completion of the X21 Call Establishment is indicated by a screen display to the user and the tester software enters the data transfer state according to the tester parameters. If possible, data is displayed to the user on the control console. This part of the program is exited either by the X21 call clearing down or by an abort command entered from the user console. Upon exit the program displays an appropriate message and returns to the Ready state.

During any stage of the simulation/test sequence the user may abort the program on command from the user keyboard. On receipt of the command the program returns to the Ready state.

As soon as the calling module (73) is entered the tester program attempts to establish a call to the unit under test. Correct operation according to the parameters provided by the user in response to the display section will cause the program to progress to the data transfer state. Failures will cause error message(s) to be displayed and for the software to return to the Ready state.

During data transfer the tester will attempt to display the data from/to the X21 port(s). Failures of the protocol and a call clear will cause suitable messages to be displayed and the tester to return to the Ready state.

In a similar fashion to the Called Module the user may abort the sequence on command from the console keyboard.

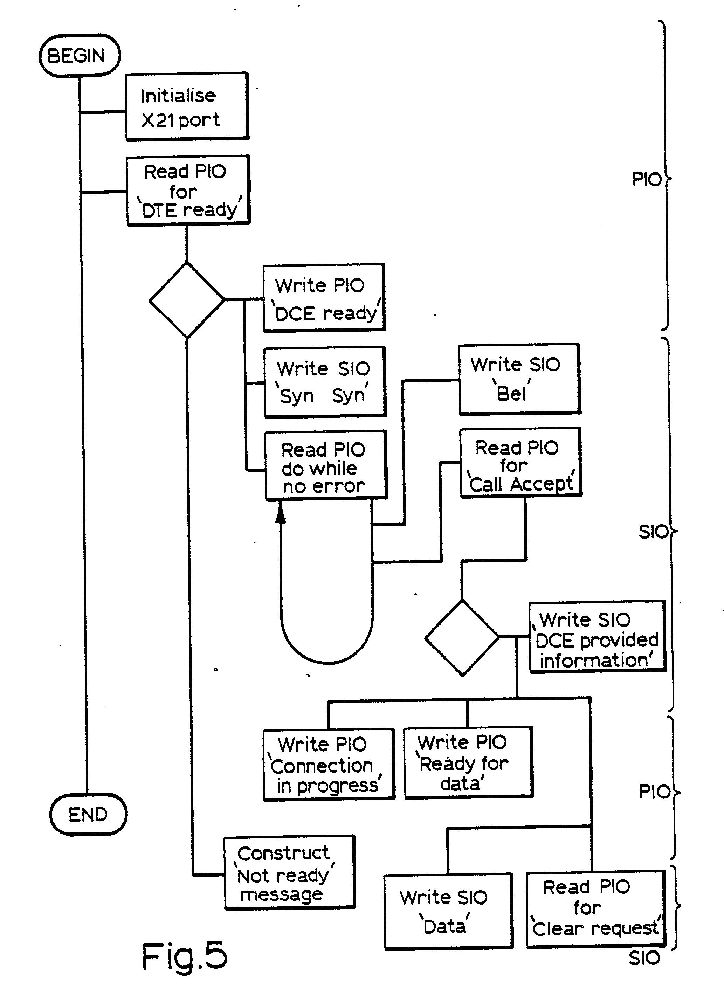

As an example consider the program module shown in Figure 5 which is concerned with establishing a call from the tester described above, acting as a DCE, to the unit under test, a DTE. The program is shown in the form of a Design Structure Diagram and follows the protocol shown in Figure 3.

The module is divided into separate procedures each performing a discrete function for that part of the protocol. The first procedure initialises the tester so that it operates as a DCE at the chosen speed and transmits the initial conditions chosen by the user during the tester set-up phase.

The program then ensures that the DTE is sending the correct conditions (DTE Ready) so that the test may proceed. These conditions are detected by the program examining the Parallel Input Output (PIO) device 16 ports connected to the DTE driven lines T and C. Failure of the DTE to transmit the correct conditions causes an appropriate message to be displayed to the user and the module is exited.

If the DTE Ready condition is detected the program uses the PIO device 16 to transmit the DCE Ready condition on the R and I lines. This is transmitted for the correct time and then the program uses the Serial Input Output (SIO) device 15 to transmit the Incoming Call state to the DTE on the R line.

The PIO device ports that are connected to the DTE's T and C lines are examined to ensure that the DTE is sending Call Accept. When Call Accept is detected the program continues to use the SIO device 15 to transmit to the DTE the DCE Provided Information parameter entered by the user during the tester set-up phase.

On the completion of the transmission of the DCE Provided Information followed by the correct number of IA5 SYN characters the program uses the PIO device to signal Connection In Progress to the DTE. This condition is transmitted for the correct length of time and then the PIO device is again used to transmit the Ready For Data condition for the appropriate time.

The program then enters the Data Transfer state and uses the SIO device 15 to transmit synchronous serial data to the DTE and the same device to receive data from the DTE. During the exchange of serial data the program monitors the PIO device connected to the DTE T and C lines in order to detect a DTE Clear Request. When this condition is detected this program module completes its function and returns control to a higher level module.

The tester described above has the advantages that:

(a) during the data transfer state user data transfer protocols other than those supported by the serial input/output device (e.g. Bisyn C, HDLC/SDLC) may be emulated by the microprocessor software using the parallel output port 16, and

(b) it can operate at relatively high speed. For reception of either steady state or synchronous state no extra reads or writers are required from the microprocessor program as either input 15 or 16 is always available. On the output side, for transmission to the T line, a single extra write instruction is necessary to switch between modes. Even this may be eliminated if the selection port is part of the same eight bit port as the T steady state output port. Hence with a single write instruction the selection from serial to parallel can be made together with the appropriate state for the parallel port.

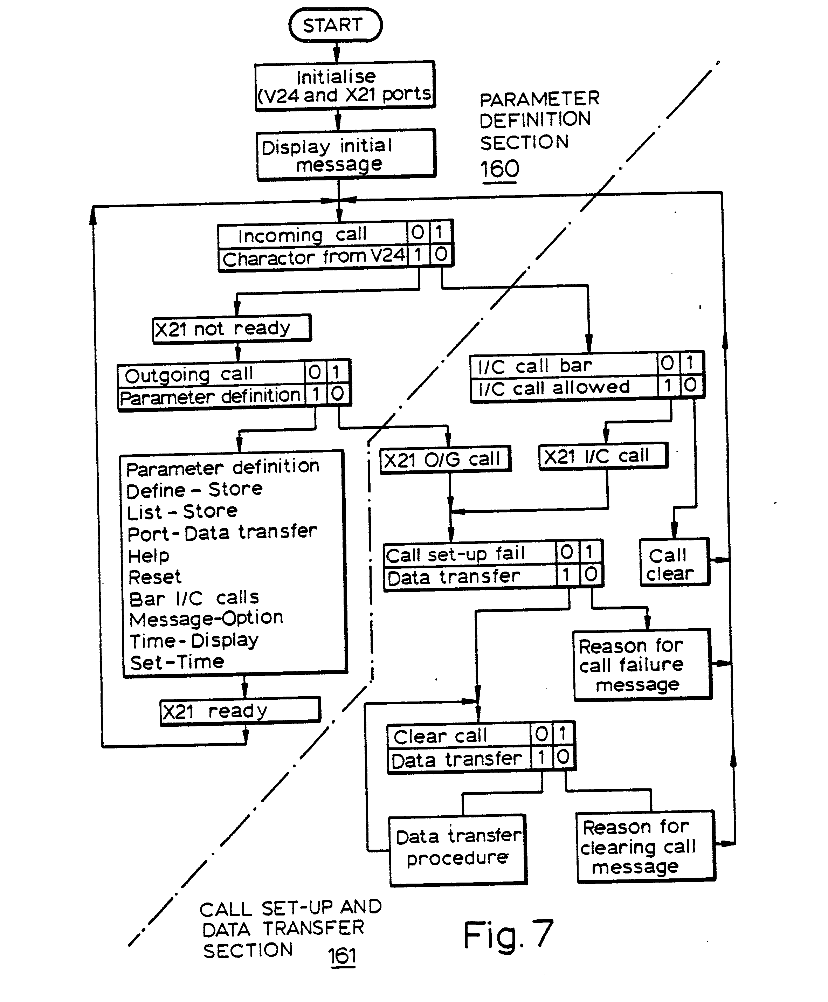

A further way in which the apparatus according to the invention can be used is illustrated in Figure 6 of the drawings. In this embodiment the apparatus operates as a V24 to X21 adaptor and is designed to enable terminal equipment which conforms to CCITT Recommendation V24 to operate with synchronous circuits conforming to CCITT Recommendation X21. The apparatus which is shown generally at 140 is located between an asynchronous V24 terminal 141 and synchronous X21 lines 142 which connect to a data control equipment (DCE) 144. The apparatus has an X21 port 145 for connection to the X21 line 142, this port having the input/output devices shown in Figure 1 of the drawings. The apparatus also has a control port 146 for connection to the V24 line, this port being provided by a second serial input/output device which is identical to the input/output device 15 shown in Figure 1. This input/output device connects to the microprocessor bus 14 of Figure 1. In addition, the apparatus also has an auxiliary data port 147 for non-X21 equipment, which enables standard X21 bis or V24 terminals such as that shown at 149, or X21 leased line equipment such as that shown at 150 to make use of the X21 call set-up features of the present apparatus. The auxiliary data port 147 includes level shifters controlled by the parallel input/output device 16 of Figure 1.

When the apparatus is arranged as shown in Figure 6, the port 146 is dedicated as a control port for X21 call set up. The apparatus can perform the required adaption during call set up by intercepting data transmitted from either source, that is from either the V24 terminals or the DCE equipment 144. In the case of the V24 terminal 141, the data is intercepted on the V24 TXD line whilst in the case of the DCE terminal 144 it is taken from the X21 R and I lines. The intercepted data is adapted according to its source to the requirements of the other interface. This is achieved by intercepting certain pre-defined IA5 character strings from the V24 terminal and converting them to control sequences that can operate and be recognised by the X21 interface. In the opposite direction, X21 to V24, control sequences received at the X21 port 145 are converted into IA5 character strings for output into the V24 terminal. These adaptions are controlled by the software operated by the microprocessor 10 and its associated memory.

It should be appreciated that character strings in either direction need only be interpreted by the adaptor 140 during non-data transfer states. During the data transfer state the adaptor may either perform some synchronous-asynchronous data adaption between the X21 port 145 and the V24 control port 146, or connect the X21 circuits directly to the auxiliary data port 147. In the first case, the arrangement allows a second V24 device such as that shown at 149 connected to the auxiliary data port 47 to be used for data transfer only. In the second case the apparatus can perform cell set up for

a) X21 terminals employing the leased line variant of X21 connected to the auxiliary data port, e.g. by use of a suitable X21 bis — X21 adaptor such as that shown at 151 in Figure 6.

b) Terminals employing the X21 bis recommendation connected to the auxiliary data port (e.g. that shown at 149 in Figure 6).

The adaptor allows standard, simple V24 (asynchronous) terminals to use circuit switched X21 circuits. It can be used as a combined V24/X21 bis to X21 adaptor where the V24 port is used to set up the call but during the transfer the adaptor connects the X21 bis port to the X21 port, acting simply as a level shifter. On the asynchronous, V24 side of the adaptor, the terminal may work at data rates up to 19200 baud.

Prior to call establishment the V24 port used has a simple but powerful man machine language available which allows the adaptor to be configured to the users needs. Commands include programming/listing of the Repertory dialling store, time of day clock, barring of incoming calls and suppression of advisory messages from the adaptor to the V24 port during call set-up. The user may select which port (V24 or X21 bis) is to be used during the Data Transfer stage of the call at either this stage or when establishing the call.

During call establishment the terminal user is informed of progress by screen messages. At any time (unless the incoming calls barred option has been invoked) until the X21 Call Request protocol is established, the adaptor may receive an incoming call. Incoming calls are notified to the V24 terminal with a screen message. Once the call enters the data transfer stage a simple protocol allows characters entered at the V24 terminal to be transmitted to a similar adaptor at the far end. A 256 character buffer is provided for each direction of transmission allowing the V24 and X21 circuits to operate at different baud rates.

The X21 interface offered by the adaptor conforms to a simplified subset of CCITT Recommendation X21 (1980). It can operate on this interface at speeds up to and including 64 kb/s. All clock signals are derived from the X21 DCE signal line (S).

A general description will now be given of the software employed by the adaptor.

The software can be considered as comprising two main sections (see Figure 7) as follows:—

1. A parameter definition section 160 is a non real time section where the user may define the operation of the adaptor commands entered from the V24 terminal 141 connected to the control port 146.

2. A call set up and data transfer section 161 which is a real time section where the adaptor sets up the call (either incoming or outgoing) and transfers data between the V24 and X21 ports 146, 145 according to the parameters defined in the previous section.

Dealing with the first section 160, this is entered on power-up. The user may then view and enter parameters to control the operation of the adaptor during call set-up and data transfer. A set of procedures is available for the user to control the parameters. During entry and display of the parameters of the adaptor sets X21 line state to NOT READY to prevent incoming calls clashing with user input and output. The adaptor parameters that may be defined include:

a) A list of 10 numbers used as a repertory store. Each store is also used to hold the configuration of the adaptor for that particular call number. The command is also available that can list the repertory store.

b) The V24 port to be used during data transfer.

c) Incoming calls barred. The adaptor will clear any incoming calls received on the X21 port if this parameter is so set.

d) Suppression of advisory messages/prompts to the V24 port or ports during operation of the adaptor.

At this level the user may also make an outgoing call on the X21 interface. This can be achieved in either of two ways:

I) Directly by entering the called number and facilities after entering the appropriate calling command.

2) Indirectly by accessing previously stored data in the repertory dial store using a different calling command (DIAL) followed by the entry number in the store (e.g. DIAL 4).

In the call set up and data transfer section 161 there are two main modules of software. These are:

1) Outgoing call.

2) Incoming call.

Each module may only be entered from the parameter definition section of the software and each module always returns to that section upon completion.

The outgoing call module attempts to set up a call on the X21 interface 145 according to the facilities and called number passed to it by the user, either directly or from the repertory store as described above. Correct operation of the outgoing call set up procedure results in the message being sent to the V24 terminal 141 indicating that the connection has been established. If the outgoing call set up is unsuccessful the adaptor issues a message (together with the reason for the failure) to the V24 port, clears the X21 port 145 to the ready state and returns to the parameter definition section of the program.

The module then transfers data from the X21 port and either of the two V24 ports, the selected port being in accord with the parameter in the calling command. Depending upon the configuration selected, the module may perform some protocol conversion on data transferred between the ports. The module remains in the data transfer state until either the V24 port indicates that the call is to be cleared or the X21 port issues a clear request. If either event occurs the adaptor clears the call on the X21 port and, after issuing a suitable clear message to the V24 port, returns to the parameter definition section of the software.

The incoming call module when entered issues an advisory message on the V24 port (control 146 or auxiliary data 147) selected by the previously set port parameter. The adaptor then operates according to the X21 incoming call protocol exchange and, if successful, enters the data transfer state. If the incoming call set up is unsuccessful the adaptor issues a message (indicating the cause of the failure) to the V24 port, clears the X21 port to the ready state and returns to the parameter definition section of the program.

During the data transfer state, the adaptor may perform some protocol conversion on the data transfer between the X21 port and the V24 port. The module remains in the data transfer state until either the V24 or X21 bis ports indicate that the call is to be cleared. If either event occurs the adaptor clears the call on the X21 port and after issuing a suitable clear message to the V24 port returns to the parameter definition section of the software.

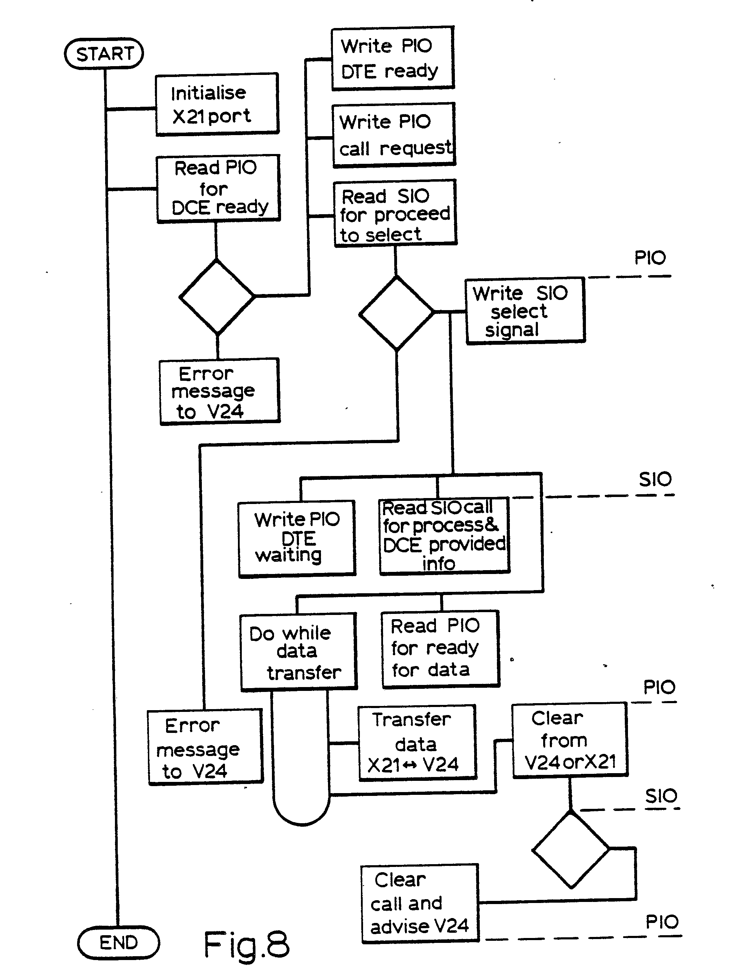

A particular example of a program module for an adaptor as described above is shown in Figure 8 of the drawings. This example shown a program module which is concerned with establishing an outgoing call set up and subsequent data transfer. The program is shown in the form of a Design Structure diagram and is arranged to follow the protocol shown in Figures 3 and 3A of the drawings.

As can be seen from Figure 8, the module is divided into separate procedures each performing a discrete function for a particular part of the X21 protocol or data transfer protocol. The first procedure initializes the adaptor hardware associated with the X21 port. The program then ensures that the DCE 144 is sending the correct conditions for call establishment to proceed. These conditions are detected by the program examining the ports of the parallel input output device 16 which is connected to the DCE driven lines R and I. Failure of the DCE 144 to transmit the correct conditions causes an appropriate message to be transmitted on the V24 control port 146 and the module then returns to the parameter definition module.

If the DCE ready condition is detected, the program uses the parallel input output device 16 to transmit the DCE ready condition for the correct number of bit times, followed by a call request which is transferred via the same parallel input device 16. The response from the DCE, proceed to select, is detected by the program reading the serial input output device 15 which is connected to the R line. If the correct proceed to select signal is not detected within the X21 defined time out period, an error message is transmitted on the V24 port on the module exit.

Correct reception of the proceed to select signal from the DCE 144 causes the program module to send the select signal to the DCE via the serial input/output device 15. At the completion of this transmission the program uses the parallel input/output device 16 to transmit to the DCE and DTE waiting signal. This signal is continuously transmitted from the parallel input device until the data transfer state is achieved.

The program module next reads the serial input/output device 15 for the call progress signal and the DCE provided information signal received from the DCE. Once these signals have been detected the module uses the parallel input/output device to receive the ready for data signal from the DCE.

On detection of the ready for data signal the program enters the data transfer part of the module. Within this module data is transferred the X21 port 145 and the V24 port chosen for data transfer. This can be the control port 146 or the auxiliary port 147. The V24 port and the X21 port are both monitored for a clearing condition which if detected causes the program to obey the X21 clear procedure and then transmit an appropriate message on the V24 port shown for data transfer. On completion of the clear procedures the module exits to the parameter definition section of the adaptor software.

The above description relates to communication between X21 and V24 equipment. It will be appreciated that the adaptor can be used to allow other types of non-X21 equipment to communicate with X21 equipment.

## Claims

1. Apparatus for providing an interface to equipment adapted to convey information over a data transmission link having Transmit (T) and Receive (R) lines on which in accordance with an interface protocol data is sometimes presented in bit serial form and sometimes presented in steady state form in conjunction with additional Indication (I), Control (C) and Signal Element Timing (S) lines, which apparatus is characterised by processing means (10, 11, 12) adapted for processing signals for transmission to or reception from such a link, and means for coupling the processing means to said link, the coupling means including a serial input/output device (15) and a parallel input/output device (16) and associated drivers (24, 25) and receivers (20, 21, 22), and logic means (30) for selectively connecting under the control of the processing means (10, 11, 12) a driver (24) to the serial input/output device (15) for the bit/byte synchronous portions of the interface protocol, or to the parallel input/output device (16) for the steady state portions of the interface protocol.

2. Apparatus as claimed in Claim 1, characterised in that an output (32) from the parallel input/output device (16) is fed to the logic means (30) to control switching between synchronous and steady state operations.

3. Apparatus as claimed in Claim 2, characterised in that the output (32) comprises a port of the parallel input/output device (16) which port is part of the same multibit parallel output port as the Transmit steady state output port (31).

4. Apparatus as claimed in any preceding claim, characterised in that the processing means (10, 11, 12) comprises a microprocessor (10) which associated memory (11, 12).

5. Apparatus as claimed in any preceding claim, characterised in that the apparatus takes the form of a tester for data transmission equipment (51), wherein the processing means (10, 11, 12) is arranged to generate test sequence signals for application to equipment (51) to be tested over the data transmission link.

6. Apparatus as claimed in Claim 5, characterised in that the processing means (10, 11, 12) is arranged so that the apparatus can operate as a DTE, or as a DCE, or an an exchange simulator between two DTE's.

7. Apparatus as claimed in any one of claims 1 to 4, characterised in that the apparatus takes the form of an adaptor including a second serial input/output device (15) by means of which equipment which communicates via a serial data link can be coupled to said processing means (10, 11, 12), and wherein said processing means (10, 11, 12), is arranged to adapt signals emanating from one source so that they are suitable for reception by the other.

8. Apparatus as claimed in Claim 7 characterised by an additional port (147) controllable by said parallel input/output device (16) for connection to other terminal equipment.

## Patentansprüche

1. Vorrichtung zum Bereitstellen einer Schnittstelle für Einrichtungen, die ausgelegt sind, Information über eine Datenübertragungsverbindung zu übermitteln, die Sende- (T) und Empfangs- (R) -leitungen hat, auf denen gemäß eines Schnittstellenprotokolls Daten manchmal in Bit-serieller Form und manchmal in stationärer Form, vorliegen in Verbindung mit zusätzlichen Anzeige- (I), Steuer- (C) und Signalelementzeitgabe- (S) -leitungen, wobei die Vorrichtung gekennzeichnet ist durch Verarbeitungseinrichtungen (10, 11, 12), die ausgelegt sind zum Verarbeiten von Signalen für die Übermittlung zu oder für den Empfang von solch einer Verbindung, und durch Einrichtungen zum Verbinden der Verarbeitungseinrichtungen mit der Verbindung, wobei die Verbindungseinrichtungen ein Seriell-Eingangs-Ausgangsbaulement (15) und ein Parallel-Eingangs-Ausgangsbauelement (16) und zugeordnete Trieber (24, 25) und Empfänger (20, 21, 22) aufweisen, und Logikeinrichtungen (30) zum selektiven Verbinden, gesteuert von den Verarbeitungseinrichtungen (10, 11, 12), eines Treibers (24) mit dem Seriell-Eingangs-Ausgangsbauelement (15) für die Bit-/Bytesynchronen Abschnitte des Schnittstellenprotokolls, oder mit dem Eingangs-Ausgangsbauelement (16) für die stationären Abschnitte des Schnittstellenprotokolls.

2. Vorrichtung nach Anspruch 1, dadurch gekennzeichnet, daß ein Ausgang (32) von dem Parallel-Eingangs-Ausgangsbauelement (16) den Logikeinrichtungen (30) zugeführt ist, um das Umschalten zwischen synchronen und stationären Betriebsweisen zu steuern.

3. Vorrichtung nach Anspruch 2, dadurch gekennzeichnet, daß der Ausgang (32) einen Anschluß des Parallel-Eingangs-Ausgangsbauelement (16) aufweist, dessen Anschluß Teil des gleichen Multibitparallelausgangsanschlusses ist wie der Ausgangsanschluß (31) für die stationäre Übertragung.

4. Vorrichtung nach einem der vorhergehenden Ansprüche, dadurch gekennzeichnet, daß die Verarbeitungseinrichtungen (10, 11, 12) einen Mikroprozessor (10) mit zugeordnetem Speicher (11, 12) aufweisen.

5. Vorrichtung nach einem der vorhergehenden Ansprüche, dadurch gekennzeichnet, daß die Vorrichtung die Funktion eines Testers für Datenübertragungseinrichtungen (51) einnimmt, wobei die Verarbeitungseinrichtungen (10, 11, 12) ausgelegt sind, Signale von Testsequenzen zu generieren zur Eingabe an das Gerät (51), das über die Datenübertragungsverbindung zu testen ist.

6. Vorrichtung nach Anspruch 5, dadurch gekennzeichnet, daß die Verarbeitungseinrichtungen (10, 11, 12) so ausgelegt sind, daß die Vorrichtung als ein DTE operieren kann, oder als ein DCE, oder als ein Vermittlungssimulator zwischen zwei DTEs.

7. Vorrichtung nach einem der Ansprüche 1 bis 4, dadurch gekennzeichnet, daß die Vorrichtung die Funktion eines Adapters annimmt, der ein zweites Seriell-Eingangs-Ausgangsbauelement (15) beinhaltet, mittels dessen Geräte, die über die serielle Datenverbindung kommunizieren, mit den Verarbeitungseinrichtungen (10, 11, 12) verbunden werden können, und wobei die Verarbeitungseinrichtungen (10, 11, 12) ausgelegt sind, um Signale, die von einer Quelle ankommen, so anzupassen, daß sie für den Empfang durch die andere geeignet sind.

8. Vorrichtung nach Anspruch 7, gekennzeichnet durch einen zusätzlichen Anschluß (147), der durch das Parallel-Eingangs-Ausgangsbauelement (16) steuerbar ist, für die Verbindung mit anderen Endgeräten.

## Revendications

1. Appareillage pour former une interface avec un équipement adapté pour transférer une information par l'intermédiaire d'une ligne de transmission de données comportant des lignes de transmission (T) et de réception (R), ou conformément à un protocole d'interface, une donnée est parfois présenté sous une forme de bits en série et est parfois présentée sous une forme d'état stable en coopération avec des lignes additionnelles d'Indication (I), de Commande (C) et de synchronisation d'élément de signaux (S), ledit appareillage étant caractérisé par des moyens de traitement (10, 11, 12) adaptés pour traiter des signaux en vue de leur transmission à une telle liaison ou bien d'une réception à partir d'une telle liaison, et des moyens pour coupler le moyen de traitement avec ladite liaison, les moyens de couplage comprenant un dispositif d'entrée/sortie en série (15) et un dispositif d'entrée/sortie en parallèle (16) ainsi que des pilotes associés (24, 25) et des récepteurs (20, 21, 22), et un moyen logique (30) pour relier sélectivement, sous la commande des moyens de traitement (10, 11, 12), un pilote (24) avec le dispositif d'entrée/sortie en série (15) pour les parties synchrones bit/octet du protocole d'interface, ou bien avec le dispositif d'entrée/sortie en parallèle (16) pour les parties d'état stable du protocole d'interface.

2. Appareillage tel que revendiqué dans la revendication 1, caractérisé en ce qu'une sortie (32) du dispositif d'entrée/sortie en parallèle (16) est reliée au moyen logique (30) pour commander une commutation entre des opérations en synchronisme et en état stable.

3. Appareillage tel que revendiqué dans la revendication 2, caractérisé en ce que la sortie (32) comprend une porte du dispositif d'entrée/sortie en parallèle (16), ladite porte faisant partie de la même porte de sortie en parallèle de bits multiples que la porte de sortie en état stable de transmission (31).

4. Appareillage tel que revendiqué dans une quelconque des revendications précédentes, caractérisé en ce que les moyens de traitement (10, 11, 12) comprennent un microprocesseur (10) associé à une mémoire (11, 12).

5. Appareillage tel que revendiqué dans une quelconque des revendications précédentes, caractérisé en ce que cet appareillage se présente sous la forme d'un contrôleur pour un équipement de transmission de données (51), où le moyen de traitement (10, 11, 12) est agencé pour produire des signaux séquentiels de test en vue de leur application à l'équipement (51) à tester par l'intermédiaire de la liaison de transmission de données.

6. Appareillage tel que revendiqué dans la revendication 5, caractérisé en ce que le moyen de traitement (10, 11, 12) est agencé de telle sorte que l'appareillage pouisse opérer comme un équipement DTE ou bien comme un équipement DCE ou bien comme un simulateur d'échange entre deux équipements DTE.

7. Appareillage tel que revendiqué dans une quelconque des revendications 1 à 4, caractérisé en ce que cet appareillage se présente sous la forme d'un adaptateur comportant un second dispositif d'entrée/sortie en série (15) au moyen duquel un équipement qui communique par l'intermédiaire d'une liaison de données en série peut être accouplé avec ledit moyen de traitement (10, 11, 12) et où ledit moyen de traitement (10, 11, 12) est agencé pour adapter des signaux provenant d'une source de telle sortie qu'ils soient appropriées pour une réception par l'autre.

8. Appareillage tel que revendiqué dans la revendication 7, caractérisé par une porte additionnelle (147) pouvant être commandée par ledit dispositif d'entrée/sortie en parallèle (16) pour une connexion avec un autre équipement terminal.

Fig.1

Fig.1A

EP 0 181 880 B1

TERMINAL

EXCHANGE

51 — | DTE | —52— | DCE |

50

## Fig.2

150
X21 leased
line
terminal

151
X21-X21bis
adapter

149
V24 or
X21 bis
terminal

X21

V24/X21bis

147    140
Auxillary
data port

X21
port

142

144

X21
port

X21

V24
terminal

V24

Control
port

146

V24-X21
ADAPTOR

145

X21
DCE

141

## Fig. 6

| | Called and cleared DTE | | | | | | | | | | |
|---|---|---|---|---|---|---|---|---|---|---|---|
| | From DTE | | | | | From DCE | | | | | |
| DTE Time limits | State | | T | | C | | R | | I | | State | DCE Time outs |
| | No. | Name | 0 | 1 | ON | OFF | 0 | 1 | ON | OFF | Name | No. |

Fig.3

CCITT-26073

4

Fig.3A

CCITT-25064

# Fig. 4

BEGIN

Initialise
X21 port

Read PIO
for
'DTE ready'

Write PIO
'DCE ready'

Write SIO
'Syn   Syn'

Write SIO
'Bel'

Read PIO
do while
no error

Read PIO
for
'Call Accept'

SIO

Write SIO
'DCE provided
information'

END

Write PIO
'Connection
in progress'

Write PIO
'Ready for
data'

PIO

Construct
'Not ready'
message

Write SIO
'Data'

Read PIO
for
'Clear request'

SIO

PIO

Fig.5

7

START

Initialise
(V24 and X21 ports)

Display initial
message

PARAMETER
DEFINITION
SECTION
**160**

| Incoming call | 0 | 1 |
| Charactor from V24 | 1 | 0 |

X21 not ready

| Outgoing call | 0 | 1 |
| Parameter definition | 1 | 0 |

| I/C call bar | 0 | 1 |
| I/C call allowed | 1 | 0 |

Parameter definition
Define – Store
List – Store
Port – Data transfer
Help
Reset
Bar I/C calls
Message-Option
Time – Display
Set – Time

X21 O/G call

X21 I/C call

| Call set-up fail | 0 | 1 |
| Data transfer | 1 | 0 |

Call
clear

X21 ready

Reason for
call failure
message

| Clear call | 0 | 1 |
| Data transfer | 1 | 0 |

Data transfer
procedure

Reason for
clearing call
message

CALL SET-UP AND
DATA TRANSFER
SECTION    **161**

# Fig. 7

Fig.8

9